# EUROPÄISCHE PATENTSCHRIFT

(11) **EP 3 765 539 B1**
(45) Veröffentlichungstag und Bekanntmachung des Hinweises auf die Patenterteilung: **14.10.2026**
(21) Anmeldenummer: 19709062.4
(22) Anmeldetag: 12.03.2019
(51) Int. Cl.: C08J 11/04, C08G 18/76, C08G 18/48, C08G 18/42, C08G 18/66, C08G 18/50, C08G 18/32, C08G 18/46

(54) **THERMOPLASTISCHES POLYURETHAN AUS RECYCLINGROHSTOFFEN**
THERMOPLASTIC POLYURETHANE MADE FROM RECYCLING RAW MATERIALS
POLYURÉTHANE THERMOPLASTIQUE DE MATIÈRES BRUTES DE RECYCLAGE

(30) Priorität: 13.03.2018 EP 18161504
(43) Veröffentlichungstag der Anmeldung: 20.01.2021
(73) Patentinhaber: BASF SE, 67056 Ludwigshafen am Rhein (DE)
(72) Erfinder: PRISSOK, Frank, 49448 Lemförde (DE); POESELT, Elmar, 49448 Lemfoerde (DE); KEMPFERT, Dirk, 49448 Lemfoerde (DE); GEHRINGER, Lionel, 67056 Ludwigshafen am Rhein (DE); WEISER, Juergen, 67056 Ludwigshafen am Rhein (DE); GOLDBECK, Matthias, 49448 Lemfoerde (DE)
(74) Vertreter: BASF IP Association
(86) Internationale Anmeldenummer: PCT/EP2019/056128
(87) Internationale Veröffentlichungsnummer: WO 2019/175151

(56) Entgegenhaltungen:
- WO-A1-95/14723
- DE-A1- 102013 012 625
- DE-A1- 2 035 175
- US-A- 5 089 571
- US-A1- 2013 212 906

## Beschreibung

Die vorliegende Erfindung betrifft ein Verfahren zur Herstellung eines thermoplastischen Polyurethans durch Umsetzung mindestens eines thermoplastischen Polyurethans (TPU-1) oder eines Polyurethangemisches enthaltend ein thermoplastisches Polyurethan (TPU-1) mit einer Verbindung (V1), die zwei Hydroxygruppen aufweist, unter Erhalt eines Gemischs (G-a) enthaltend ein thermoplastisches Polyurethan (TPU-2), und die Umsetzung des Gemischs (G-a) mit einem Gemisch (G-b) enthaltend eine Isocyanatzusammensetzung (ZI) enthaltend mindestens ein Diisocyanat und optional eine Polyolzusammensetzung (ZP) enthaltend mindestens ein Polyol (P2) unter Erhalt eines thermoplastischen Polyurethans (TPU-Ziel), wobei der Anteil der eingesetzten Komponenten (ZI) und (ZP) auf den Hartsegmentgehalt des eingesetzten thermoplastischen Polyurethans (TPU-1) und den Hartsegmentgehalt des thermoplastischen Polyurethans (TPU-Ziel) abgestimmt wird. Die Erfindung betrifft weiterhin ein thermoplastisches Polyurethan, erhalten oder erhältlich gemäß einem derartigen Verfahren sowie dessen Verwendung zur Herstellung von Extrusions-, Spritzguss- und Pressartikel sowie Schäumen, Kabelummantelungen, Schläuchen, Profilen, Antriebsriemen, Fasern, Vliesen, Folien, Formteilen, Sohlen, Sportartikeln, Schuhen, Steckern, Gehäusen, Dämpfungselementen für Elektroindustrie, Automobilindustrie, Maschinenbau, 3D-Druck, Medizin und Konsumartikel.

Thermoplastische Polyurethane, im Folgenden abgekürzt TPU genannt, sind seit langem bekannt. Ihre technische Bedeutung beruht auf der Kombination hochwertiger mechanischer Eigenschaften mit den Vorteilen der kostengünstigen Thermoplastverarbeitung. Ihre Herstellung kann kontinuierlich oder diskontinuierlich nach verschiedenen bekannten Verfahren, beispielsweise dem Band- oder dem Extruderverfahren, durchgeführt werden kann. Eine Übersicht über TPU, ihre Eigenschaften und Anwendungen wird z.B. im "Kunststoff-Handbuch", Band 7, Polyurethane, 3. Auflage, 1993, herausgegeben von G. Oertel, Carl Hanser Verlag, München gegeben.

Thermoplastische Polyurethane (TPU) stellen Blockcopolymere dar, bei denen harte Blöcke mit weichen Blöcken in einer Polymerkette verbunden sind. Unter harten Blöcken sind Polymersegmente zu verstehen, deren Erweichungstemperatur-Glastemperatur oder Kristallitschmelztemperatur weit oberhalb der Gebrauchstemperatur liegt. Weiche Blöcke sind Polymersegmente mit Glastemperaturen weit unterhalb der Gebrauchstemperatur, vorzugsweise kleiner 0° C. Die harten Blöcke bilden physikalische Vernetzungen, die während der thermoplastischen Verarbeitung reversibel gespalten und beim Abkühlen neu gebildet werden können. Letztere Produktgruppe weist als teilkristalline Hartphase das Umsetzungsprodukt eines org. Diisocyanates mit einem niedermolekularen Diol auf und als amorphe Weichphase das Umsetzungsprodukt eines org. Diisocyanates mit einem Polyester-; Polycarbonat- oder Polyetherdiol mit Molekulargewichten von üblicherweise 500 bis 5000 g/mol.

Thermoplastische Polyurethane (TPU) zeigen gegenüber vernetzten Polyurethanen den Vorteil, dass sie wiederholt aufgeschmolzen und damit als Polymer recycelt werden können. Die thermoplastische Verarbeitung würde ein einfaches und günstiges Verfahren zur Wiederverwendung von Polyurethanabfällen darstellen.

Für die Wiederverwertung von Polyurethanen sind chemische Verfahren wie Hydrolyse, Hydrierung, Pyrolyse und Glykolyse geeignet. Des Weiteren können die Polyurethane in Isocyanaten aufgelöst und das dadurch nach Reinigung erhaltene Gemisch der Wiederverwendung zugeführt werden (DE 43 16 389 A1). Diesen Verfahren ist gemeinsam, dass die Polyurethane nur mit erheblichem Aufwand an Rohstoffen und Energie wieder in einen Produktionsprozess eingeführt werden können. WO 95/14723 A1 offenbart ein Verfahren, bei dem ein TPU als Ausgangsmaterial durch Reaktion mit niedermolekularen Diolen hydrolytisch abgebaut und anschliessend durch Umsetzung mit einem Polyisocyanat erneut zu einem TPU umgesetzt wird.

Im Prinzip lassen sich aus den wieder aufgeschmolzenen TPU direkt neue Produkte herstellen. Allerdings gibt es schon beim Recycling von sortenreinen Produktionsabfällen und / oder Gebrauchsabfällen mehrere Probleme: mit jedem Aufschmelzvorgang nimmt das Molekulargewicht und die Polymerkettenlänge durch Spaltung ab, werden Produktionsabfälle verschiedener Grades und Lots gesammelt, bei denen es sich um Produkte mit unterschiedlichen Hartsegmentgehalten handelt kann durch eine Mischung nur ein mehr oder weniger zufälliges Produkt erhalten werden. Aufgrund der Reaktion von Isocyanatgruppen mit Feuchtigkeit kommt es zu einem vermehrten Aufbau von Harnstoffverbindungen, die sich negativ auf das Schmelzverhalten der Thermoplaste auswirken und zu Vernetzung führen können. Die erzielbaren mechanischen Eigenschaften dieser Produkte hängen vom Mischungsverhältnis ab und liegen erfahrungsgemäß immer unterhalb der Ausgangsprodukte. Eine Zugabe von etwas Isocycanat kann das Molekulargewicht der Polymere zwar wieder etwas erhöhen, hat aber keinen Einfluss auf die Endsteifigkeit und kann eine Phasenvermischung von Weich- und Hartphase sowie eine Vernetzung nicht wieder rückgängig machen.

Somit war es eine Aufgabe der vorliegenden Erfindung ein Verfahren bereitzustellen, mit dem aus thermoplastischen Polyurethanen insbesondere von sortenreinen Produktionsabfällen oder Gebrauchsabfällen ein Material hergestellt werden kann, das in seinen mechanischen Eigenschaften mit frisch hergestelltem TPU vergleichbar ist. Eine weitere Aufgabe der vorliegenden Erfindung war es, ein Verfahren bereitzustellen, mit dem kostengünstig thermoplastische Polyurethane aus Recyclingrohstoffen hergestellt werden können, die gute mechanische Eigenschaften aufweisen. Des Weiteren können mit dem Verfahren aus Mischungen thermoplastischer Polyurethane verschiedener Härten im Wesentlichen unabhängig von der vorliegenden Mischungshärte TPU hergestellt werden, die einer gewünschten Zielhärte entsprechen.

Erfindungsgemäß wird diese Aufgabe gelöst durch ein Verfahren zur Herstellung eines thermoplastischen Polyurethans umfassend die Schritte
(a) Umsetzung mindestens eines thermoplastischen Polyurethans (TPU-1) oder eines Polyurethangemisches enthaltend ein thermoplastisches Polyurethan (TPU-1) mit mindestens einer Verbindung (V1), die zwei Hydroxygruppen aufweist, unter Erhalt eines Gemischs (G-a) enthaltend ein thermoplastisches Polyurethan (TPU-2), wobei das mittlere Molekulargewicht des thermoplastischen Polyurethans (TPU-2) geringer ist, als das mittlere Molekulargewicht des thermoplastischen Polyurethans (TPU-1);
(b) Umsetzung des Gemischs (G-a) mit einem Gemisch (G-b) enthaltend eine Isocyanatzusammensetzung (ZI) enthaltend mindestens ein Diisocyanat und optional eine Polyolzusammensetzung (ZP) enthaltend mindestens ein Polyol (P2) unter Erhalt eines thermoplastischen Polyurethans (TPU-Ziel),
wobei der Anteil der eingesetzten Komponenten (ZI) und (ZP) auf den Hartsegmentgehalt des eingesetzten thermoplastischen Polyurethans (TPU-1), (V1) und den Hartsegmentgehalt des thermoplastischen Polyurethans (TPU-Ziel) abgestimmt wird.

Überraschend wurde gefunden, dass der Molekulargewichtsabbau von einem ersten thermoplastischen Polyurethan oder eine Mischung von thermoplastischen Polyurethanen gezielt eingeleitet werden kann und in einem darauffolgenden Aufbauschritt ein definiert einstellbares TPU hergestellt werden kann. Hierzu wird zunächst der Hartsegmentgehalt bzw. die Steifigkeit oder die Shorehärte einer möglichst homogenen Mischung des zu recycelnden Produktes ermittelt. Mit diesen Daten und den Zielgrößen für den Hartsegmentgehalt lassen sich die erforderlichen Rezepturbestandteile, insbesondere an Polyol, Diol und Isocyanat, berechnen.

In dem erfindungsgemäßen zweistufigen Verfahren wird beispielsweise in einem Reaktionsextruder zunächst das eingesetzte thermoplastische Polyurethan oder die Mischung von thermoplastischen Polyurethanen, beispielsweise ein Recyclingprodukt, mittels Diolen gezielt an den Urethanbindungen gespalten und in einem folgenden Schritt mittel Isocyanaten und gegebenenfalls weiteren Diolen und Polydiolen zu einem linearen thermoplastischen Polyurethan wiederaufgebaut. Durch die Auswahl der verwendeten Bausteine kann gezielt Weichphase, beispielsweise durch Einsatz von Polyol und/oder aliphatischem Isocyanat, Hartphase, beispielsweise durch Einsatz von Diol und/oder aromatischem Isocyanat, oder ein phasensepariertes TPU, beispielsweise durch Einsatz von Diol, Polyol und aromatischem Isocyanat, aufgebaut werden.

Es wurde überraschend gefunden, dass das erfindungsgemäß erhältliche thermoplastische Polyurethan vergleichbare Eigenschaften wie ein direkt aus den Aufbaukomponenten hergestelltes thermoplastisches Polyurethan aufweist.

Das erfindungsgemäße Verfahren umfasst die Schritte (a) und (b). Zunächst wird gemäß Schritt (a) mindestens ein thermoplastisches Polyurethan (TPU-1) oder eines Polyurethangemisches enthaltend ein thermoplastisches Polyurethan (TPU-1) mit mindestens einer Verbindung (V1), die zwei Hydroxygruppen aufweist, unter Erhalt eines Gemischs (G-a) enthaltend ein thermoplastisches Polyurethan (TPU-2) umgesetzt, wobei das mittlere Molekulargewicht des thermoplastischen Polyurethans (TPU-2) geringer ist, als das mittlere Molekulargewicht des thermoplastischen Polyurethans (TPU-1).

Erfindungsgemäß findet eine Reaktion des thermoplastischen Polyurethans (TPU-1) mit der Verbindung (V1) unter Spaltung der Urethanbindungen des thermoplastischen Polyurethans statt. Die eingesetzte Verbindung (V1) weist zwei Hydroxygruppen auf. Erfindungsgemäß kann die Verbindung (V1) insbesondere ein Diol mit einem Molekulargewicht von <500g/mol sein oder ein Polyol mit einem Molekulargewicht von ≥ 500 g/mol. Erfindungsgemäß können auch zwei oder mehr Verbindungen (V1) eingesetzt werden.

Demgemäß betrifft die vorliegende Erfindung gemäß einer weiteren Ausführungsform ein Verfahren wie zuvor beschrieben, wobei die Verbindung (V1) ausgewählt ist aus Diolen (D1) mit einem zahlenmittleren Molekulargewicht < 500 g/mol oder Polyolen (P1) mit einem zahlenmittleren Molekulargewicht ≥ 500 g/mol. Demgemäß gilt für diese Ausführungsform die Beziehung: $\left(V1\right) = \left(D1\right) + \left(P1\right) .$

Gemäß Schritt (b) wird das in Schritt (a) erhaltene Gemisch (G-a) mit einem Gemisch (G-b) enthaltend eine Isocyanatzusammensetzung (ZI) enthaltend mindestens ein Diisocyanat und optional eine Polyolzusammensetzung (ZP) enthaltend mindestens ein Polyol (P2) unter Erhalt eines thermoplastischen Polyurethans (TPU-Ziel) umgesetzt. Dabei werden erfindungsgemäß die einzelnen Komponenten in solchen Mengen eingesetzt, dass der Anteil der eingesetzten Komponenten (ZI) und (ZP) auf den Hartsegmentgehalt des eingesetzten thermoplastischen Polyurethans (TPU-1), (V1) und den Hartsegmentgehalt des thermoplastischen Polyurethans (TPU-Ziel) abgestimmt wird.

Dabei wird erfindungsgemäß die Menge der eingesetzten Isocyanatzusammensetzung und der Verbindung (V1) sowie der Polyolzusammensetzung so abgestimmt, dass unter Berücksichtigung des zuvor bestimmten Hartsegmentanteils des eingesetzten thermoplastischen Polyurethans (TPU-1) bzw. des Polyurethangemisches enthaltend ein thermoplastisches Polyurethan (TPU-1) der gewünschte Hartsegmentanteil des mit dem erfindungsgemäßen Verfahren hergestellten thermoplastischen Polyurethans (TPU-Ziel) erhalten wird.

Der Hartsegmentgehalt des thermoplastischen Polyurethans kann im Rahmen der vorliegenden Erfindung auf alle dem Fachmann bekannten Arten bestimmt werden. Erfindungsgemäß wird der Hartsegmentgehalt insbesondere über den Gehalt des Diols am Gesamtgewicht des jeweiligen thermoplastischen Polyurethans bestimmt.

Gemäß einer weiteren Ausführungsform betrifft die vorliegende Erfindung demgemäß ein Verfahren wie zuvor beschrieben, wobei der Hartsegmentgehalt über den Gehalt des Diols am Gesamtgewicht des jeweiligen thermoplastischen Polyurethans bestimmt wird.

Es wurde überraschend gefunden, dass der Hartsegmentanteil des hergestellten thermoplastischen Polyurethans vorteilhafterweise berechnet werden kann. Dabei kann im Rahmen der vorliegenden Erfindung der Hartsegmentanteils (HSC, in Gew.%) des zuzugebenden Gemisches (G-b) zum Erreichen des Ziel-HSC (Gew.-%) von (TPU-Ziel) gemäß der Formel (1) berechnet werden: ${HSC}_{G - c} = \left({HSC}_{TPU - Ziel}-{w}_{TPU - 1}*{HSC}_{TPU - 1}\right) / \left(1-{w}_{TPU - 1}\right)$ (1)

Dabei fließen die folgenden Annahmen und Beziehungen in die Berechnung mit ein:
Die Recylingquote, w_{TPU-1}, kann zwischen 0 und 1 gewählt werden.

Für die folgenden Berechnungen gilt die Beziehung: $G - c = G - b + V 1$

Sofern als Verbindung (V1) ein Diol (D1) und/oder ein Polyol (P1) eingesetzt werden gilt vorzugsweise: $G - c = G - b + V 1 = G - b + D 1 + P 1$

Mit $Massenanteil \left({w}_{i}\right) : {w}_{i} = {m}_{i} / {m}_{total}$ (2)

Berechnung der Rezeptur des zuzugebenden Gemisches (G-c) auf Basis des gewünschten HSC, erfolgt im Rahmen der vorliegenden Erfindung gemäß der Formel (5), die sich aus den Formeln (3) und (4) durch Einsetzen von (4) in (3) ergibt: ${HSC}_{G - c} = \left({n}_{D 1}*{M}_{ZI}+{m}_{D 1}\right) * 100 / {m}_{G - c}$ (3)

Mit ${n}_{i} = {m}_{i} / {M}_{i}$ (4)

Gemäß Formel (5) kann die Menge des/der KV berechnet werden, die 100 g des zuzufahrenden Gemisches (G-c) beinhaltet: ${m}_{D 1} = \left({HSC}_{G - c}+{m}_{G - c}\right) / \left(\left({M}_{ZI}/{M}_{D 1}+1\right)*100\right)$ (5)

Unter Berücksichtigung der Massenbilanz ${m}_{total} = {m}_{TPU - 1} + {m}_{G - c}$ (6)

Gemäß Formel (7) kann die Kennzahl des Ziel-TPU berechnet werden: ${KZR}_{TPU - Ziel} = 1000 * {n}_{ZI} / \left({n}_{D 1}+{n}_{P 1 +}{n}_{P 2}+{n}_{rTPU - 1}\right)$ (7)

Dabei werden die Annahmen zugrunde gelegt, dass das eingesetzte thermoplastische Polyurethan (TPU-1) OH-terminiert ist. Im Rahmen der vorliegenden Erfindung kann der Massenanteil des Recycling (TPU-1), w(TPU-1), zwischen 0 und 1 frei gewählt werden.

Der Hartsegmentanteil der Summe der zugesetzten Komponenten (G-c) kann zwischen 0 und 100 % liegen, wobei bei einem Wert von 0 kein Diol (D1) mit einem Mw <500g/mol sondern ein längerkettiges Polyol P1 zum Abbau des TPU-1 zugefügt wird. Für den Abbau sind üblicherweise mindestens 5 - 10 Teile auf 100 Teile des abzubauenden TPU-1 erforderlich.

Der Hartsegmentanteil des thermoplastischen Polyurethans (TPU-1), HSC_{TPU-1}, ist entweder bekannt oder kann aus der Härte des TPU durch bekannte Verfahren ermittelt werden, beispielsweise mittels IR-Spektroskopie. Sofern eine Mischung verschiedener thermoplastischer Polyurethane eingesetzt wird, wird der gemittelte Hartsegmentanteil zugrunde gelegt.

Gemäß einer weiteren Ausführungsform betrifft die vorliegende Erfindung demgemäß ein Verfahren wie zuvor beschrieben, wobei der Anteil der eingesetzten Komponenten (ZI), (ZP) und (D1), (P1) auf den Hartsegmentgehalt des eingesetzten thermoplastischen Polyurethans (TPU-1) über die Formel (1) abgestimmt wird: ${HSC}_{G - c} = \left({HSC}_{TPU - Ziel}-{w}_{TPU - 1}*{HSC}_{TPU - 1}\right) / \left(1-{w}_{TPU - 1}\right)$ (1), mit
- HSC_{G-c}: Hartsegmentgehalt eines Gemischs G-c, wobei G-c = G-b + V1= G-b + D1 + P1
- HSC_{TPU-Ziel}: Hartsegmentgehalt des erhaltenen thermoplastischen Polyurethans TPU-Ziel
- w_{TPU-1}: Massenanteil des thermoplastischen Polyurethans TPU-1 mit$\left({w}_{i}\right) {: w}_{i} = {m}_{i} {/ m}_{total}$ (2)
- HSC_{TPU-1}: Hartsegmentgehalt des thermoplastischen Polyurethans TPU-1.

Das Verhältnis des Molekulargewichts des eingesetzten thermoplastischen Polyurethans (TPU-1) zu dem Molekulargewicht des gemäß Schritt (a) in dem Gemisch (G-a) erhaltenen thermoplastischen Polyurethans (TPU-2) kann in weiten Bereichen variieren. Auch das Verhältnis des Hartsegmentanteils des eingesetzten thermoplastischen Polyurethans (TPU-1) zu dem Hartsegmentanteil des gemäß Schritt (a) in dem Gemisch (G-a) erhaltenen thermoplastischen Polyurethans (TPU-2) kann im Rahmen der vorliegenden Erfindung in weiten Bereichen variieren.

Es hat sich als vorteilhaft erwiesen, wenn das das thermoplastische Polyurethan (TPU-2) ein mittleres Molekulargewicht Mw von weniger als 50% des mittleren Molekulargewichts von (TPU-1) aufweist. Gemäß einer weiteren Ausführungsform betrifft die vorliegende Erfindung demgemäß ein Verfahren wie zuvor beschrieben, wobei das thermoplastische Polyurethan (TPU-2) ein mittleres Molekulargewicht Mw von weniger als 50% des mittleren Molekulargewichts von (TPU-1) aufweist.

Vorzugsweise weist das thermoplastische Polyurethan (TPU-2) ein mittleres Molekulargewicht Mw im Bereich von 5000 bis 15000 g/mol auf.

Soweit nicht anders angegeben erfolgt im Rahmen der vorliegenden Erfindung die Bestimmung der gewichtsmittleren Molekulargewichte Mw der thermoplastischen Block-Copolymere, gelöst in HFIP (Hexafluorisopropanol) mittels GPC. Die Bestimmung des Molekulargewichts erfolgt mittels zwei hintereinandergeschalteter GPC-Säulen (PSS-Gel; 100A; 5µ; 300*8mm, Jordi- Gel DVB; MixedBed; 5µ; 250*10mm; Säulentemperatur 60°C; Fluss 1 mL/min; RI-Detektor). Dabei erfolgt die Kalibrierung mit Polymethylmethacrylat (EasyCal; Fa. PSS, Mainz), als Laufmittel wird HFIP verwendet.

Im Rahmen der vorliegenden Erfindung wird das Verfahren beispielsweise so geführt, dass das thermoplastische Polyurethan (TPU-2) ein mittleres Molekulargewicht Mw von kleiner 50000 g/mol aufweist, bevorzugt von kleiner 30000 g/mol, weiter bevorzugt von kleiner 15000 g/mol. Im Rahmen der vorliegenden Erfindung weist das thermoplastische Polyurethan (TPU-2) vorzugsweise ein mittleres Molekulargewicht Mw von größer als 5000 g/mol auf.

Gemäß einer weiteren Ausführungsform betrifft die vorliegende Erfindung demgemäß ein Verfahren wie zuvor beschrieben, wobei das thermoplastische Polyurethan (TPU-2) OH-terminiert ist und ein mittleres Molekulargewicht Mw von kleiner 50000 g/mol aufweist.

Gemäß Schritt (a) erfolgt die Umsetzung bei einer Temperatur von über 200°C. Die Umsetzung gemäß Schritt (a) erfolgt unter geeigneten Bedingungen, die eine Reaktion des eingesetzten thermoplastischen Polyurethans (TPU-1) oder des Polyurethangemisches enthaltend ein thermoplastisches Polyurethan (TPU-1) mit den freien OH-Gruppen der Verbindung (V1) erlauben. Die Umsetzung kann erfindungsgemäß in einer geeigneten Apparatur erfolgen, wobei dem Fachmann geeignete Verfahren an sich bekannt sind.

Die Umsetzung gemäß Schritt (a) kann beispielsweise bei einer Temperatur im Bereich von 200 bis 360°C erfolgen, vorzugsweise im Bereich von 220 bis 320°C und insbesondere von 220 bis 310°C, weiter bevorzugt von 230 bis 280°C und einer Verweilzeit von beispielsweise 20 bis 300 s in beispielsweise fließfähigem, erweichten oder vorzugsweise geschmolzenem Zustand des thermoplastischen Polyurethans, insbesondere durch Rühren, Walzen, Kneten oder vorzugsweise Extrudieren, beispielsweise unter Verwendung von üblichen Plastifizierungsvorrichtungen, wie beispielsweise Mühlen, Knetern oder Extrudern, vorzugsweise in einem Extruder.

Gemäß einer weiteren Ausführungsform betrifft die vorliegende Erfindung demgemäß ein Verfahren wie zuvor beschrieben, wobei die Umsetzung gemäß Schritt (a) bei einer Temperatur im Bereich von 200 bis 360°C erfolgt.

Die Umsetzung gemäß Schritt (b) kann beispielsweise bei einer Temperatur im Bereich von 170 bis 260°C erfolgen, vorzugsweise im Bereich von 180 bis 240°C und insbesondere von 190 bis 230°C, weiter bevorzugt von 200 bis 220°C, insbesondere durch Rühren, Walzen, Kneten oder vorzugsweise Extrudieren, beispielsweise unter Verwendung von üblichen Plastifizierungsvorrichtungen, wie beispielsweise Mühlen, Knetern oder Extrudern, vorzugsweise in einem Extruder.

Gemäß einer weiteren Ausführungsform betrifft die vorliegende Erfindung demgemäß ein Verfahren wie zuvor beschrieben, wobei die Umsetzung gemäß Schritt (b) bei einer Temperatur im Bereich von 170 bis 260°C erfolgt.

Insbesondere kann die Umsetzung gemäß Schritt (a) oder die Umsetzung gemäß Schritt (b) oder die Umsetzung gemäß Schritt (a) und Schritt (b) in einem Extruder erfolgen.

Gemäß einer weiteren Ausführungsform betrifft die vorliegende Erfindung demgemäß ein Verfahren wie zuvor beschrieben, wobei die Umsetzung gemäß Schritt (a) und die Umsetzung gemäß Schritt (b) kontinuierlich in einem Extruder erfolgen.

Geeignete Vorrichtungen sind dem Fachmann an sich bekannt.

Erfindungsgemäß ist es auch möglich, dass für die Umsetzung gemäß Schritt (a) oder gemäß Schritt (b) Zusatzstoffe oder Hilfsmittel eingesetzt werden, um die Umsetzung gemäß Schritt (a) zu beschleunigen bzw. zu verbessern. Insbesondere können Katalysatoren eingesetzt werden.

Gemäß einer weiteren Ausführungsform betrifft die vorliegende Erfindung demgemäß ein Verfahren wie zuvor beschrieben, wobei die Umsetzung gemäß Schritt (a) mindestens ein Katalysator zugegeben wird, der die Spaltung von (TPU-1) beschleunigt.

Geeignete Katalysatoren sind ebenfalls grundsätzlich aus dem Stand der Technik bekannt. Geeignete Katalysatoren sind beispielsweise organische Metallverbindungen ausgewählt aus der Gruppe bestehend aus Zinn-, Titan-, Zirkonium-, Hafnium-, Bismut-, Zink-, Aluminium- und Eisenorganylen, wie beispielsweise Zinnorganylverbindungen, bevorzugt Zinndialkyle wie, Dimethylzinn oder Diethylzinn, oder Zinnorganylverbindungen und Zinn-Salze aliphatischer Carbonsäuren, bevorzugt Zinn-II-isooctoat, Zinndioctoat, Zinndiacetat, Zinndilaurat, Dibutylzinndiacetat, Dibutylzinndilaurat, sowie Titansäureester, Bismutverbindungen, wie Bismutalkylverbindungen, bevorzugt Bismutneodecanoat oder ähnliche, oder Eisenverbindungen, bevorzugt Eisen-(III)-acetylacetonat.

Die Katalysatoren werden üblicherweise in Mengen von 3 ppm bis 2000 ppm, bevorzugt 10 ppm bis 1000 ppm, weiter bevorzugt 20 ppm bis 500 ppm und am meisten bevorzugt von 30 pmm bis 300 ppm eingesetzt.

Gemäß einer weiteren Ausführungsform betrifft die vorliegende Erfindung demgemäß ein Verfahren wie zuvor beschrieben, wobei der Katalysator ausgewählt ist aus der Gruppe bestehend aus Metallkatalysatoren auf der Basis von Zinn, Zink, Titan, Bismuth oder Eisen. Geeignete Katalysatoren für die Umsetzung gemäß Schritt (a) sind beispielsweise Tributylzinnoxid, Zinn(II)-Diisooctoat, Dibutylzinndilaurat oder Bi(III)-Carboxylate.

Gemäß Schritt (a) wird das thermoplastische Polyurethan (TPU-1) mit einer Verbindung (V1), die zwei Hydroxygruppen aufweist, umgesetzt. Die Verbindung (V1) ist vorzugsweise ein Diol (D1) mit einem zahlenmittleren Molekulargewicht < 500 g/mol oder ein Polyol (P1) mit einem zahlenmittleren Molekulargewicht ≥ 500 g/mol.

Geeignete Diole sind dem Fachmann an sich bekannt. Dabei können bevorzugt aliphatische, araliphatische, aromatische und/oder cycloaliphatische Diole mit einem Molekulargewicht von 50 g/mol bis 220 g/mol eingesetzt werden. Bevorzugt sind Alkandiole mit 2 bis 10 C-Atomen im Alkylenrest, insbesondere Di-, Tri-, Tetra-, Penta-, Hexa-, Hepta-, Okta-, Nona- und/oder Dekaalkylenglykole. Für die vorliegende Erfindung sind besonders bevorzugt 1,2-Ethylenglykol, 1,3-Propandiol, 1,4-Butandiol, 1,6-Hexandiol. Auch aromatische Verbindungen wie Hydroxychinon(bis(2-hydroxyethyl))ether können eingesetzt werden.

Bevorzugt wird ein Diol mit einem Molekulargewicht Mw < 220 g/mol eingesetzt.

Gemäß einer weiteren Ausführungsform werden mehr als ein Diol eingesetzt, beispielsweise Mischungen der genannten Diole.

Gemäß einer weiteren Ausführungsform betrifft die vorliegende Erfindung demgemäß ein Verfahren wie zuvor beschrieben, wobei das Diol (D1) ausgewählt ist aus der Gruppe bestehend aus 1,2-Ethylenglykol, 1,3-Propandiol, 1,4-Butandiol und 1,6-Hexandiol.

Auch geeignete Polyole (P1) mit einem zahlenmittleren Molekulargewicht ≥ 500 g/mol sind dem Fachmann an sich bekannt. Geeignete Polyole (P1) weisen üblicherweise ein zahlenmittleres Molekulargewicht von kleiner als 5000 g/mol, vorzugsweise von kleiner als 3000 g/mol auf.

Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1., besonders bevorzugt werden Polyesterole oder Polyetherole als Polyole eingesetzt. Besonders bevorzugt sind Polyetherpolyole. Das zahlenmittlere Molekulargewicht der erfindungsgemäß eingesetzten Polyole liegen vorzugsweise zwischen 500 g/mol und 3000 g/mol, bevorzugt zwischen 600 g/mol und 2500 g/mol, insbesondere zwischen 650 g/mol und 2000 g/mol. Bevorzugte Polyetherole sind erfindungsgemäß Polyethyleneglykole, Polypropylenglykole und Polytetrahydrofurane.

Gemäß einer besonders bevorzugten Ausführungsform ist das Polymerdiol ein Polytetrahydrofuran (PTHF) mit einem Molekulargewicht im Mn Bereich von 500 g/mol bis 3000 g/mol.

Erfindungsgemäß sind neben PTHF auch andere weitere Polyetherdiole geeignet, oder auch Polyesterdiole.

Gemäß einer weiteren Ausführungsform betrifft die vorliegende Erfindung demgemäß ein Verfahren zur Herstellung eines Diblockcopolymers wie zuvor beschrieben, wobei das Polymerdiol ein Polyetherdiol ist. Gemäß einer anderen Ausführungsform betrifft die vorliegende Erfindung auch ein Verfahren zur Herstellung eines Diblockcopolymers wie zuvor beschrieben, wobei das Polymerdiol ein Polytetrahydrofuran ist.

Geeignet sind beispielsweise Polyetherdiole, wie beispielsweise PTHF250 oder PTHF 650 oder ein kurzkettiges Polypropylenglykol wie ein PPG 500 können eingesetzt werden. Erfindungsgemäß können bei der Herstellung der Polyole (P1) auch weitere Polyesterdiole als Einsatzstoffe eingesetzt werden, beispielsweise Butandioladipat oder Ethylenadipat.

Als Polyesterole können Polyesterole auf Basis von Disäuren und Diolen eingesetzt werden. Als Diole werden vorzugsweise Diole mit 2 bis 10 Kohlenstoffatomen, beispielsweise Ethandiol, Propandiol, Butandiol, Pentandiol, Hexandiol oder Di- oder Triethylenglykol, insbesondere 1,4-Butandiol oder Mischungen daraus eingesetzt. Als Disäuren können alle bekannten Disäuren eingesetzt werden, beispielsweise lineare oder verzweigtkettige Disäuren mit vier bis 12 Kohlenstoffatomen oder Mischungen daraus. Vorzugsweise wird Adipinsäure als Disäure eingesetzt.

Erfindungsgemäß sind neben PTHF diverse weitere Polyether geeignet, aber auch Polyester, Blockcopolymere sowie Hybridpolyole wie z.B. Poly(ester/amid) verwendbar.

Geeignete Polyole sind somit beispielsweise ausgewählt aus der Gruppe bestehend aus Polyetherolen, Polyesterolen, Polycarbonatalkoholen und Hybridpolyolen umfasst.

Erfindungsgemäß kann das Polyol in reiner Form oder in Form einer Zusammensetzung enthaltend das Polyol und mindestens ein Lösungsmittel eingesetzt werden. Geeignete Lösungsmittel sind dem Fachmann an sich bekannt.

Erfindungsgemäß kann das Polyol in reiner Form oder in Form einer Zusammensetzung enthaltend das Polyol und mindestens ein Lösungsmittel eingesetzt werden. Geeignete Lösungsmittel sind dem Fachmann an sich bekannt.

Erfindungsgemäß können auch Mischungen mehrerer Polyole eingesetzt werden
Im Rahmen der vorliegenden Erfindung sind vorzugsweise das Polyol (P1) und das Polyol (P2) ausgewählt aus der Gruppe bestehend aus Polyetherolen, Polyesterolen, Polycarbonatalkoholen und Hybridpolyolen.

Gemäß einer weiteren Ausführungsform betrifft die vorliegende Erfindung demgemäß ein Verfahren wie zuvor beschrieben, wobei das Polyol (P1) ausgewählt ist aus der Gruppe bestehend aus Polyetherolen, Polyesterolen, Polycarbonatalkoholen und Hybridpolyolen.

Gemäß einer weiteren Ausführungsform betrifft die vorliegende Erfindung demgemäß ein Verfahren wie zuvor beschrieben, wobei das Polyol (P2) ausgewählt ist aus der Gruppe bestehend aus Polyetherolen, Polyesterolen, Polycarbonatalkoholen und Hybridpolyolen.

Erfindungsgemäß wird in Schritt (b) eine Isocyanatzusammensetzung (ZI) enthaltend mindestens ein Diisocyanat eingesetzt. Erfindungsgemäß können auch Mischungen aus zwei oder mehr Diisocyanaten eingesetzt werden. Bevorzugte Diisocyanate sind im Rahmen der vorliegenden Erfindung insbesondere aliphatische oder aromatische Diisocyanate.

Des Weiteren können im Rahmen der vorliegenden Erfindung vorreagierte Prepolymere als Isocyanatkomponenten eingesetzt werden, bei denen ein Teil der OH-Komponenten in einem vorgelagerten Reaktionsschritt mit einem Isocyanat zur Reaktion gebracht werden. Diese Prepolymere werden in einem nachfolgenden Schritt, der eigentlichen Polymerreaktion, mit den restlichen OH-Komponenten zur Reaktion gebracht und bilden dann das thermoplastische Polyurethan. Die Verwendung von Prepolymeren bietet die Möglichkeit, auch OH-Komponenten mit sekundären Alkoholgruppen zu verwenden.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trimethylhexamethylen-1,6-diisocyanat, 1-Isocyanato-3,3,5-trimethyl-5-isocyanatomethylcyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat, 4,4'-, 2,4'- und/oder 2,2'-Methylendicyclohexyldiisocyanat (H12MDI).

Bevorzugte aliphatische Polyisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI); insbesondere bevorzugt sind 4,4'-, 2,4'- und/oder 2,2'-Methylendicyclohexyldiisocyanat (H12MDI) und 1-Isocyanato-3,3,5-trimethyl-5-isocyanatomethyl-cyclohexan oder Mischungen davon.

Demgemäß betrifft die vorliegende Erfindung gemäß einer weiteren Ausführungsform ein wie zuvor beschriebenes Verfahren, wobei das Polyisocyanat ausgewählt ist aus der Gruppe bestehend aus 4,4'-, 2,4'- und/oder 2,2'-Methylendicyclohexyldiisocyanat (H12MDI), Hexamethyl-endiisocyanat (HDI) und 1-Isocyanato-3,3,5-trimethyl-5-isocyanatomethylcyclohexan (IPDI) oder Mischungen davon.

Geeignete aromatische Diisocyanate sind insbesondere 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3,'-Dimethyl-4,4'-Diisocyanato-Diphenyl (TODI), p-Phenylendiisocyanat (PDI), Diphenylethan-4,4'-diisoyanat (EDI), Diphenylmethandiisocyanat, 3,3'-Dimethyl-diphenyl-diisocyanat, 1,2-Diphenylethan-diisocyanat und/oder Phenylendiisocyanat.

Bevorzugte aromatische Diisocyanate sind 2,2'-, 2,4'- und/oder 4,4'-Diphenylmethandiisocyanat (MDI) und deren Mischungen.

Bevorzugt ist erfindungsgemäß das Diisocyanat ausgewählt aus der Gruppe bestehend aus 2,2'-, 2,4'- und/oder 4,4'-Diphenylmethandiisocyanat (MDI), 2,4- und/oder 2,6-Toluylendiisocyanat (TDI), 4,4'-, 2,4'- und/oder 2,2'-Methylendicyclohexyldiisocyanat (H12MDI), Hexamethylendiisocyanat (HDI) und 1-Isocyanato-3,3,5-trimethyl-5-isocyanatomethylcyclohexan (IPDI).

Gemäß einer weiteren Ausführungsform betrifft die vorliegende Erfindung demgemäß ein Verfahren zur Herstellung eines Diblockcopolymers wie zuvor beschrieben, wobei das Diisocyanat ausgewählt ist aus der Gruppe bestehend aus 2,2'-, 2,4'- und/oder 4,4'-Diphenylmethandiisocyanat (MDI), 2,4- und/oder 2,6-Toluylendiisocyanat (TDI), 4,4'-, 2,4'-und/oder 2,2'-Methylendicyclohexyldiisocyanat (H12MDI), Hexamethylendiisocyanat (HDI) und 1-Isocyanato-3,3,5-trimethyl-5-isocyanatomethyl-cyclohexan (IPDI).

Erfindungsgemäß kann das Diisocyanat in reiner Form oder in Form einer Zusammensetzung enthaltend das Diisocyanat und mindestens ein Lösungsmittel eingesetzt werden. Geeignete Lösungsmittel sind dem Fachmann bekannt. Geeignet sind beispielsweise nicht reaktive Lösungsmittel wie Ethylacetat, Methylethylketon, Tetrahydrofuran und Kohlenwasserstoffe.

Erfindungsgemäß können bei der Umsetzung gemäß Schritt (b) weitere Einsatzstoffe zugesetzt werden, beispielsweise Katalysatoren oder Hilfs- und Zusatzstoffe.

Geeignete Hilfs- und Zusatzstoffe sind dem Fachmann an sich bekannt. Genannt seien beispielsweise oberflächenaktive Substanzen, Flammschutzmittel, Keimbildungsmittel, Oxidationsstabilisatoren, Antioxidantien, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S. 103-113) entnommen werden.

Geeignete Katalysatoren sind ebenfalls grundsätzlich aus dem Stand der Technik bekannt. Geeignete Katalysatoren sind beispielsweise organische Metallverbindungen ausgewählt aus der Gruppe bestehend aus Zinn-, Titan-, Zirkonium-, Hafnium , Bismut-, Zink-, Aluminium- und Eisenorganylen, wie beispielsweise Zinnorganylverbindungen, bevorzugt Zinndialkyle wie Dimethylzinn oder Diethylzinn, oder Zinnorganylverbindungen und Zinn-Salze aliphatischer Carbonsäuren, bevorzugt Zinn-II-isooctoat, Zinndioctoat, Zinndiacetat, Zinndilaurat, Dibutylzinndiacetat, Dibutylzinndilaurat, sowie Titansäureester, Bismuthverbindungen, wie Bismuthalkylverbindungen und -caboxylate, bevorzugt Bismuthneodecanoat oder ähnliche, oder Eisenverbindungen, bevorzugt Eisen-(III)-acetylacetonat.

Gemäß einer bevorzugten Ausführungsform werden die Katalysatoren ausgewählt aus Zinnverbindungen und Bismuthverbindungen, weiter bevorzugt Zinn-Caboxylate oder Bismuthcarboxylate. Besonders geeignet sind die Zinn-II-isooctoat und Bismuthneodecanoat.

Die Katalysatoren werden üblicherweise in Mengen von 3 ppm bis 2000 ppm, bevorzugt 10 ppm bis 1200 ppm, weiter bevorzugt 20 ppm bis 1000 ppm und am meisten bevorzugt von 30 pmm bis 800 ppm eingesetzt.

Gemäß einer weiteren Ausführungsform betrifft die vorliegende Erfindung demgemäß ein Verfahren wie zuvor beschrieben, wobei das Diisocyanat ausgewählt ist aus der Gruppe bestehend aus 2,2'-, 2,4'- und/oder 4,4'-Diphenylmethandiisocyanat (MDI), 2,4- und/oder 2,6-Toluylendiisocyanat (TDI), 4,4'-, 2,4'- und/oder 2,2'-Methylendicyclohexyldiisocyanat (H12MDI), Hexamethylendiisocyanat (HDI) und 1-Isocyanato-3,3,5-trimethyl-5-isocyanatomethylcyclohexan (IPDI).

Erfindungsgemäß kann das in dem Verfahren eingesetzte thermoplastische Polyurethan (TPU-1) beispielsweise aus einer Überproduktion oder Fehlproduktion stammen oder auch ein Recycling-Produkt sein. Das thermoplastische Polyurethan (TPU-1) wird im Verfahren beispielsweise in geschredderter Form, als Granulat, als Agglomerat oder Pulver eingesetzt.

Vorzugsweise wird im Rahmen der vorliegenden Erfindung das thermoplastische Polyurethan (TPU-1) im Verfahren als Agglomerat eingesetzt.

Gemäß einer weiteren Ausführungsform betrifft die vorliegende Erfindung demgemäß ein Verfahren wie zuvor beschrieben, wobei das eingesetzte thermoplastische Polyurethan (TPU-1) aus einem Recycling-Prozess, beispielsweise aus einem Recycling-Prozess von industriellen Produktionsabfällen oder Gebrauchsabfällen, stammt.

Die Schwierigkeit bei dem Recycling von thermoplastischen Polyurethanen und insbesondere dem Agglomerieren liegt darin, die Temperaturentwicklung in einer geeigneten Vorrichtung so zu steuern, dass einerseits genügend Wärme vorhanden ist, um die thermoplastischen Kunststoffteilchen in den plastifizierten Zustand überzuführen, andererseits aber zu hohe Temperaturen vermieden werden, die ansonsten zu einer thermischen Materialschädigung durch Abspaltung der Polymerketten führen würden. Erfindungsgemäß wird vorzugsweise ein thermoplastisches Polyurethan in Form eines Agglomerats oder Granulats eingesetzt. Demgemäß weist im Rahmen der vorliegenden Erfindung das Verfahren zum Recyclen von thermoplastischen Polyurethanen einen Agglomerationsschritt auf. Vorzugsweise wird ein Agglomerat mit einem mittleren Partikeldurchmesser von 0,5 bis 10 mm eingesetzt.

Erfindungsgemäß wird vorzugsweise ein thermoplastisches Polyurethan aus industriellen Produktionsabfällen oder Gebrauchsabfällen eingesetzt, das in einem Recycling-Prozess erhalten wird. Vorzugsweise werden in dem Recycling-Prozess Formkörper oder auch Reste aus eine Verfahren zur Herstellung eines thermoplastischen Polyurethans eingesetzt, beispielsweise Mahlreste, Angüsse, Schnittreste. Vorzugsweise umfasst der Recycling-Prozess die Aufarbeitung eines Formkörpers oder eines Restes, der im Wesentlichen aus einem thermoplastischen Polyurethan besteht. Es ist somit möglich, derartige Formkörper nahezu vollständig zu recyceln. Dabei umfasst das erfindungsgemäße Verfahren gemäß einer bevorzugten Ausführungsform das Zerkleinerung eines derartigen Formkörpers und das anschließende Agglomerieren des Zwischenprodukts zu Granulaten, Agglomeraten, oder dergleichen das dann in einem Verfahren eingesetzt werden kann.

Gemäß einer weiteren Ausführungsform betrifft die vorliegende Erfindung demgemäß ein Verfahren wie zuvor beschrieben, wobei der Recycling-Prozess mindestens die Schritte (i) bis (iii) umfasst:
(i) Bereitstellen eines Formkörpers, der im Wesentlichen aus mindestens einem thermoplastischen Polyurethan besteht,
(ii) Zerkleinerung des Formkörpers,,
(iii) Agglomerieren des zerkleinerten Formkörpers zu einem Zwischenprodukt (TPU-ZP).

Erfindungsgemäß kann das Verfahren weitere Schritte umfassen, beispielweise Reinigungsschritte, Trennung des thermoplastischen Polyurethans von Fremdmaterialen wie beispielweise Metallen oder anderen Kunststoffen, Farbesortierung, Nachzerkleinerung des Zwischenprodukts (TPU-ZP), Mischen und Homogenisieren des Zwischenprodukts (TPU-ZP) in beispielweise einem Mischsilo, oder das Mischen verschiedener Zwischenprodukte.

Der Formkörper kann dabei im Rahmen der vorliegenden Erfindung das thermoplastische Polyurethan in verschiedenen Formen umfassen, beispielsweise in Form eines Schaums oder eines Partikelschaums, eines kompakten Materials oder auch eines Garns. Erfindungsgemäß kann der Formkörper das thermoplastische Polyurethan auch in Mischungen der genannten Formen aufweisen.

Beispielsweise Schuhe können im Wesentlichen aus thermoplastischen Polyurethanen in verschiedenen Verarbeitungsformen bestehen. Gemäß einer weiteren Ausführungsform betrifft die vorliegende Erfindung demgemäß ein Verfahren wie zuvor beschrieben, wobei der Formkörper ein Schuh oder ein Teil eines Schuhs ist. Dabei kann es sich beispielsweise um einen Teil einer Sohle oder auch einen Vliesstoff handeln, sofern der Vliesstoff überwiegend aus einem thermoplastischen Polyurethan besteht.

Erfindungsgemäß kann der im Wesentlichen aus thermoplastischen Polyurethanen Formkörper, beispielweise aus Kabelummantelungen, Schläuchen, Profilen, Antriebsriemen, Fasern, Vliesen, Folien, Formteilen, Sohlen, Sportartikeln, Schuhen, Steckern, Gehäusen, Dämpfungselementen für Elektroindustrie, Automobilindustrie, Maschinenbau, 3D-Druck, Medizin und Konsumartikel.

Erfindungsgemäß kann das thermoplastische Polyurethan auch in Form eines Schaums oder eines Partikelschaums vorliegen. Gemäß einer weiteren Ausführungsform betrifft die vorliegende Erfindung demgemäß ein Verfahren wie zuvor beschreiben, wobei der Formkörper ein expandiertes thermoplastisches Polyurethan umfasst, beispielsweise einen Partikelschaum. Erfindungsgemäß können beispielsweise auch Partikelschäume eingesetzt werden, die in einem Herstellungsverfahren eines Partikelschaums anfallen.

Gemäß einer weiteren Ausführungsform betrifft die vorliegende Erfindung demgemäß ein Verfahren wie zuvor beschrieben, wobei der Formkörper ein reines oder verschweißtes expandiertes thermoplastisches Polyurethan umfasst.

Im Rahmen der vorliegenden Erfindung besteht der Formkörper vorzugsweise zu mindestens 85 Gew.-% aus einem thermoplastischen Polyurethan, weiter bevorzugt zu mindestens 90 Gew.-%, besonders bevorzugt zu mindestens 95 Gew.-%, insbesondere bevorzugt zu mindestens 98 Gew.-%.

Gemäß einer weiteren Ausführungsform betrifft die vorliegende Erfindung demgemäß ein Verfahren wie zuvor beschrieben, wobei der Formkörper zu mindestens 85 Gew.-% aus einem thermoplastischen Polyurethan besteht. Gemäß einer weiteren Ausführungsform betrifft die vorliegende Erfindung demgemäß ein Verfahren wie zuvor beschrieben, wobei der Formkörper zu mindestens 95 Gew.-% aus einem thermoplastischen Polyurethan besteht.

Derartige Formkörper werden mit üblichen Verfahren zerkleinert, beispielsweise geschreddert, z.B. in einer Rotations- oder Drehmühle bei Raumtemperatur auf eine Korngröße von üblicherweise kleiner 20 mm, oder zermahlen, z.B. nach bekannten Kaltmahlverfahren, beispielsweise unter Kühlung mit flüssigem Stickstoff, in einer Walzen- oder Hammermühle Vorzugsweise wird dabei eine Korngröße von kleiner als 20 mm eingestellt, beispielsweise eine Korngröße im Bereich von 1 mm bis 20 mm, bevorzugt im Bereich von 3 mm bis 20 mm. Soweit nicht anders angegeben wird im Rahmen der vorliegenden Erfindung die Korngröße mit einem Trennsieb ermittelt.

Gemäß einer weiteren Ausführungsform betrifft die vorliegende Erfindung demgemäß ein Verfahren wie zuvor beschrieben, wobei beim Zerkleinern der Formkörper gemäß Schritt (ii) eine Korngröße von kleiner 20 mm eingestellt ist.

Es hat sich gezeigt, dass die exakte und konstante Einhaltung der richtigen materialspezifischen Temperatur zu verbesserten Eigenschaften bei den erhaltenen Produkten führt. Im Rahmen der vorliegenden Erfindung wurde gefunden, dass es beim Recycling vorteilhaft ist, die thermische Belastung des thermoplastischen Polyurethans zu verhindert und eine Temperatur beim Agglomerieren in einem definierten Bereich einzustellen

Gemäß einer weiteren Ausführungsform betrifft die vorliegende Erfindung demgemäß ein Verfahren wie zuvor beschrieben, wobei beim Agglomerieren gemäß Schritt (iii) die Temperatur unterhalb des wirklichen Schmelzbereichs des thermoplastischen Polyurethans bleibt.

Gemäß einer weiteren Ausführungsform betrifft die vorliegende Erfindung demgemäß ein Verfahren wie zuvor beschrieben, wobei beim Agglomerieren gemäß Schritt (iii) die Temperatur unterhalb von 200°C liegt.

Die thermische Belastung und Abspaltung der Polymerketten kann insbesondere durch eine geeignete Wahl der Vorrichtung für das Agglomerieren reduziert werden. Es hat sich gezeigt, dass insbesondere solche Vorrichtungen geeignet sind, bei denen für das Agglomerieren Vorrichtungen eingesetzt werden, die einen ringscheibenförmigen Verdichtungsraum, insbesondere mit geeigneten Einbauten, aufweisen.

Gemäß einer weiteren Ausführungsform betrifft die vorliegende Erfindung demgemäß ein Verfahren wie zuvor beschrieben, wobei für das Agglomerieren gemäß Schritt (iii) eine Vorrichtung eingesetzt wird, umfassend eine Förderschnecke mit Guteinlauf und einen ringscheibenförmigen Verdichtungsraum, wobei die Förderschnecke das Aufgabegut axial in den Verdichtungsraum leitet.

Geeignete Vorrichtungen sind beispielsweise beschrieben in der DE 102005027861 B4 oder der EP 0 373 372 B1.

Die Granulate, Agglomerate, oder dergleichen aus recycelten thermoplastischen Polyurethanen weisen üblicherweise eine Korngröße von 0,1 bis 50 mm auf, bevorzugt 0,5 bis 25 mm, insbesondere 2 bis 10 mm. Für die Zugabe von Granulaten, Agglomeraten, oder dergleichen aus recycelten thermoplastischen Polyurethanen in das Reaktionsgemisch vor der Umsetzung des Reaktionsgemisches beträgt die bevorzugte Korngröße 0,5 bis 10 mm.

Die mit dem erfindungsgemäßen Verfahren erhaltenen oder erhältlichen thermoplastischen Polyurethane weisen gute mechanische Eigenschaften auf und lassen sich in üblichen Verfahren für die Verarbeitung von thermoplastischen Polyurethanen einsetzen. Besonders vorteilhaft können die erfindungsgemäß erhaltenen oder erhältlichen thermoplastischen Polyurethane in Spritzguss-Verfahren zur Herstellung von Formkörpern eingesetzt werden.

Beschrieben wird auch ein thermoplastisches Polyurethan, erhalten oder erhältlich gemäß einem Verfahren wie zuvor beschrieben. Das thermoplastische Polyurethan, wird somit erhalten oder ist erhältlich gemäß einem Verfahren zur Herstellung eines thermoplastischen Polyurethans umfassend die Schritte
(a) Umsetzung mindestens eines thermoplastischen Polyurethans (TPU-1) oder eines Polyurethangemisches enthaltend ein thermoplastisches Polyurethan (TPU-1) mit einer Verbindung (V1), die zwei Hydroxygruppen aufweist, unter Erhalt eines Gemischs (G-a) enthaltend ein thermoplastisches Polyurethan (TPU-2), wobei das mittlere Molekulargewicht des thermoplastischen Polyurethans (TPU-2) geringer ist, als das mittlere Molekulargewicht des thermoplastischen Polyurethans (TPU-1);
(b) Umsetzung des Gemischs (G-a) mit einem Gemisch (G-b) enthaltend eine Isocyanatzusammensetzung (ZI) enthaltend mindestens ein Diisocyanat und optional eine Polyolzusammensetzung (ZP) enthaltend mindestens ein Polyol (P2) unter Erhalt eines thermoplastischen Polyurethans (TPU-Ziel),
wobei der Anteil der eingesetzten Komponenten (ZI) und (ZP) auf den Hartsegmentgehalt des eingesetzten thermoplastischen Polyurethans (TPU-1), (V1) und den Hartsegmentgehalt des thermoplastischen Polyurethans (TPU-Ziel) abgestimmt wird.

Die Verarbeitung der erhaltenen thermoplastischen Polyurethane kann gemäß üblichen Verfahren erfolgen, beispielsweise auf Extrudern, Spritzgussmaschinen, Kalandern, Knetern und Pressen, vorzugsweise im Spritzguss..

Aufgrund der guten mechanischen Eigenschaften und des guten Temperaturverhaltens sind die thermoplastischen Polyurethane insbesondere zur Herstellung von Extrusions-, Spritzguss- und Pressartikel sowie Schäumen, Kabelummantelungen, Schläuchen, Profilen, Antriebsriemen, Fasern, Vliesen, Folien, Formteilen, Sohlen, Schuhen, Steckern, Gehäusen, Dämpfungselementen für Elektroindustrie, Automobilindustrie, Maschinenbau, 3D-Druck, Medizin und Konsumartikel geeignet.

Beschrieben wird auch die Verwendung eines thermoplastischen Polyurethans wie zuvor beschrieben oder eines thermoplastischen Polyurethans, erhalten oder erhältlich gemäß einem Verfahren wie zuvor beschrieben zur Herstellung von Extrusions-, Spritzguss- und Pressartikel sowie Schäumen, Kabelummantelungen, Schläuchen, Profilen, Antriebsriemen, Fasern, Vliesen, Folien, Formteilen, Sohlen, Schuhen, Steckern, Gehäusen, Dämpfungselementen für Elektroindustrie, Automobilindustrie, Maschinenbau, 3D-Druck, Medizin und Konsumartikel.

Weitere Ausführungsformen der vorliegenden Erfindung sind den Ansprüchen und den Beispielen zu entnehmen.

Die nachfolgenden Beispiele dienen der Veranschaulichung der Erfindung, sind aber in keiner Weise einschränkend hinsichtlich des Gegenstands der vorliegenden Erfindung.

### BEISPIELE

### 1. Einsatzstoffe/Materialien

- Polyol 1: Polytetrahydrofuran mit einem Mw von 1000g/mol
- Polyol 2: Polytetrahydrofuran mit einem Mw von 2000g/mol
- Polyol 3: Polyesterdiol auf der Basis von Adipinsäure und 1,4, Butandiol, einer Funktionalität von 2 und einem Mw von 2400g/mol
- Isocyanat 1: 4,4'-MDI
- Diol 1: 1,4-Butandiol
- Antioxidanz 1: phenolisches Antioxidanz
- Hydrolysestabilisator 1: polymerer Hydrolysestabilisator auf der Basis von Carbodiimden
- TPU 1: thermoplastisches Polyurethan, basierend auf Polyol 1 (61,95 Masse%), Isocyanat 1 (30,98 Masse%), Diol 1 (5,57 Masse%) und Antioxidanz 1 (1,00 Masse%)
- TPU 2: thermoplastisches Polyurethan, basierend auf Polyol 1 (61,95 Masse%), Isocyanat 1 (30,98 Masse%), Diol 1 (5,57 Masse%) und Antioxidanz 1 (1,00 Masse%)
- TPU 3: thermoplastisches Polyurethan, basierend auf Polyol 3 (56,00 Masse%), Isocyanat 1 (33,60 Masse%), Diol 1 (9,95 Masse%) und Hydrolysestabilisator 1 (0,45 Masse%)
- TPU 4: thermoplastisches Polyurethan, basierend auf Polyol 1 (29,20 Masse%), Polyol 2 (29,20 Masse%), Isocyanat 1 (21,70 Masse%), Diol 1 (3,88 Masse%), Antioxidanz 1 (1,00 Masse%) und Weischmacher (15 Masse %)
- TPU 5: thermoplastisches Polyurethan, basierend auf Polyol 1 (48,56 Masse%), Isocyanat 1 (40,30 Masse%), Diol 1 (10,14 Masse%) und Antioxidanz 1 (1,00 Masse%)
- TPU 6: thermoplastisches Polyurethan, basierend auf Polyol 1 (41,33 Masse%), Isocyanat 1 (45,47 Masse%), Diol 1 (12,65 Masse%) und Antioxidanz 1 (0,55 Masse%)
- TPU 7: thermoplastisches Polyurethan, basierend auf Polyol 1 (37,34 Masse%), Isocyanat 1 (48,28 Masse%), Diol 1 (14,04 Masse%) und Antioxidanz 1 (0,50 Masse%)
- TPU-ZP 1: agglomeriertes Zwischenprodukt, basierend auf Formkörpern welchen aus TPU 1 (100 Masse%) bestehen
- TPU-ZP 2: agglomeriertes Zwischenprodukt, basierend auf eine Mischung aus Formkörpers welchen aus TPU 1 (67 Masse%) und TPU 4 (33 Masse%) bestehen
- TPU-ZP 3: agglomeriertes Zwischenprodukt, basierend auf eine Mischung aus Formkörpers welchen aus TPU 1 (60 Masse%), TPU 4 (30 Masse%) und TPU 7 (10 Masse%) bestehen
- TPU-ZP 4: agglomeriertes Zwischenprodukt, basierend auf eine Mischung aus Formkörpers welchen aus TPU 1 (42,5 Masse%), TPU 4 (20,5 Masse%), TPU 5 (8,33 Masse%), TPU 6 (2,1 Masse%) und TPU 7 (26,6 Masse%) bestehen
- x-Flex: Isocyanatkonzentrat auf der Basis von einem MDI Prepolymer in einem thermoplastischen Polyurethan auf Polyesterbasis mit einem NCO Gehalt von 10 Gew %

### 2. Allgemeine Versuchsbeschreibung

### 2.1 Herstellung des agglomerierten Zwischenprodukts (TPU-ZP)

Bereitgestellte Formkörper aus thermoplastischem Polyurethan wurden in einer Schneidmühle Pallmann PS 3 ½ vermahlen und in einen Plast-Agglomerator PFV 250 der Fa. Pallmann eingesaugt. Bei Verarbeitungstemperaturen von 130-180°C wurde das zu recyclierende thermoplastische Polyurethan innerhalb weniger Sekunden agglomeriert und homogen zu eine schüttbaren Granulat verarbeitet.

In den Vergleichsbeispielen wurde der oben beschriebene Agglomerationsschritt durch einen Extrusionsschritt in einem 40mm Zweiwellenextruder mit Unterwasser bei den üblichen Schmelztemperaturen der verwendeten TPU ersetzt.

### 2.2 Beispiele für die kontinuierliche Synthese

In das erste Gehäuse eines Zweiwellenextruders, ZSK58 der Fa. Coperion mit einer Verfahrenslänge von 48D, wird das Recycling-TPU zugeführt. Nach dem Schmelzen wird im Gehäuse 3 der Kettenverlängerer sowie ggf. ein Katalysator hinzugefügt. Bei Gehäusetemperaturen von 250 - 300°C erfolgt die Umurethanisierung, bevor im fünften Gehäuse die zum Molmassenaufbau erforderlichen Mengen des Polyols und Diisocyanats der Reaktionsmischung hinzugegeben werden. Stromabwärts erfolgt der Molmassenaufbau bei Gehäusetemperaturen von 180 - 230 °C. Im Anschluss an die Synthese wird die erhaltene Schmelze Unterwasser- oder Stranggranuliert und bei 80°C getrocknet.

### 2.3 Abwandlung für die Beispiele mit x-Flex Zugabe:

Die Verfahrensführung erfolge analog zu Beispiel 2.3. Die Zugabe des x-Flex erfolgte in Zonenschnecke 1, zusammen mit dem TPU.

### 2.4 Extrusionsprüfung

Das Granulat wurde anschließend durch Spritzgießen zu Prüfkörpern bzw. durch Extrusion zu Schläuchen weiterverarbeitet. Die Schläuche wurden durch Extrusion auf einem 19-mm Einwellenextruder (Fa. Brabender) mit einem L/D-Verhältnis von 25 und einer 3-Zonenschnecke zu Schläuchen mit einem Durchmesser von 6 mm extrudiert. Die Zonentemperaturen lagen zwischen 160 und 200 °C. Die Einstellung der Schlauchgeometrie erfolgte durch Variation der Abzugsgeschwindigkeit. Es erfolgt eine visuelle Bewertung der Schläuche hinsichtlich der Oberflächenbeschaffenheit (Stippen) und der Homogenität.

### 3. Beispiele

Die Versuchsbeispiele wurden entsprechend der Formeln über den Hartsegmentbereich berechnet.

Die folgende Bespielrechnung ist für Beispiel V2 exemplarisch ausgeführt:

| | |
|---|---|
| Vorgaben: | Recyclingquote = 80%, HSC-Ziel-TPU: 32,3% (Shorehärte 90A), HSC-RecyclingTPU: 21,0% |

${HSC}_{G - c} = \left({HSC}_{TPU - Ziel}-{w}_{TPU - 1}*{HSC}_{TPU - 1}\right) / \left(1-{w}_{TPU - 1}\right)$ Gleichung (1)

Beispielrechnung: ${HSC}_{G - c} = \left(32,3%-0,8*21,0%\right) / \left(1-0,8\right)$ HSC_{G-c} = 77,5% ${m}_{D 1} = \left(HSG-c*mG-b\right) / \left(\left(MZI/MD1+1\right)*100\right) , Masse Butandiol auf 100 g G - c bezogen :$ Gleichung (5)

Beispielrechnung: ${m}_{D 1} = \left(77,5%*100g\right) / \left(\left(250g/mol/90g/mol+1\right)*100\right)$ m_{D1} = 20,5 g

Demnach sind in den 20 Teile des TPU_{zu} 4,20 g Butandiol enthalten

Nach (7) kann die Kennzahl des Ziel TPU berechnet werden. Die Anteile MDI und Polyole müssen so gewählt werden, dass die gewünschte Kennzahl erzielt wird. ${KZR}_{TPU - Ziel} = 1000 * {n}_{ZI} / \left({n}_{D 1}+{n}_{P 1 +}{n}_{P 2}+{n}_{rTPU - 1}\right)$

Beispielrechnung: ${KZR}_{TPU - Ziel} = 1000 * \left(12,95g/250,2 g/mol\right) / \left(\begin{matrix}\left(4,13g/90,1 g/mol\right) + \\ \left(3,41g/1000g/mol\right) + 79 , 5 g / 80000 g / mol\end{matrix}\right)$ KZR_{TPU-Ziel} = 1030 $P 2 = 1000 g / mol , TPU - 1 = 80000 g / mol , D 1 = 90 , 1 g / mol , ZI = 250 , 2 g / mol$

### 3.1 Vergleichsbeispiel 1 (VB1)

TPU 1 wurde als Recylat direkt im Spritzguss wiederverwendet.

### 3.2 Vergleichsbeispiel 2 (VB2)

TPU1 wurde als Recyklat durch die ZSK58 (ZSK58 ist ein gleichlaufender Zweiwellenextruder der Marke Coperion mit einem Innendurchmesser von 58mm) gefahren.

### 3.3 Vergleichsbeispiel 3 (VB3)

TPU 1 wurde als Recyklat eingesetzt, es wurde MDI in die Schmelze (Zone 5) zugesetzt. Die eingesetzten Mengen sind in Tabelle 1 wiedergegeben.

### 3.4 Vergleichsbeispiel 4 (VB4)

TPU 1 wurde als Recyklat eingesetzt. Es wurde x-Flex in die Schmelze (Zone 1) zugesetzt. Die eingesetzten Mengen sind in Tabelle 1 wiedergegeben.

### 3.5 Vergleichsbeispiel 5 (VB5)

TPU 1 wurde als Recyklat eingesetzt. Es wurde x-Flex in die Schmelze (Zone 1) zugesetzt. Die eingesetzten Mengen sind in Tabelle 1 wiedergegeben.

### 3.6 Beispiel 1 (V1)

TPU 1 wurde als Recyklat eingesetzt. Es wurden Diol 1, Polyol 1 und Isocyanat 1 in den angegebenen Mengen zugesetzt. Die eingesetzten Mengen sind in Tabelle 1 wiedergegeben.

### 3.7 Beispiel 2 (V2)

TPU 1 wurde als Recyklat eingesetzt. Es wurden Diol 1, Polyol 1 und Isocyanat 1 in den angegebenen Mengen zugesetzt. Die eingesetzten Mengen sind in Tabelle 1 wiedergegeben.

### 3.8 Beispiel 3 (V3)

TPU 1 wurde als Recyklat eingesetzt. Es wurden Diol 1, Polyol 1 und Isocyanat 1 in den angegebenen Mengen zugesetzt. Die eingesetzten Mengen sind in Tabelle 1 wiedergegeben.

### 3.9 Beispiel 4 (V4)

TPU 1 wurde als Recyklat eingesetzt. Es wurden Diol 1, Polyol 1 und Isocyanat 1 in den angegebenen Mengen zugesetzt. Die eingesetzten Mengen sind in Tabelle 1 wiedergegeben.

### 3.10 Beispiel 5 (V5)

TPU 2 wurde als Recyklat eingesetzt. Es wurden Diol 1, Polyol 1 und Isocyanat 1 in den angegebenen Mengen zugesetzt. Die eingesetzten Mengen sind in Tabelle 1 wiedergegeben.

### 3.11 Beispiel 6 (V6)

TPU 3 wurde als Recyklat eingesetzt. Es wurden Diol 1, Polyol 1 und Isocyanat 1 in den angegebenen Mengen zugesetzt. Die eingesetzten Mengen sind in Tabelle 1 wiedergegeben.

### 3.12 Beispiel 7 (V7)

TPU-ZP 1 wurde als agglomerierte Recyklat eingesetzt. Es wurden Diol 1, Polyol 1 und Isocyanat 1 in den angegebenen Mengen zugesetzt. Die eingesetzten Mengen sind in Tabelle 1 wiedergegeben.

### 3.13 Beispiel 8 (V8)

TPU-ZP 2 wurde als agglomerierte Recyklat eingesetzt. Es wurden Diol 1, Polyol 1 und Isocyanat 1 in den angegebenen Mengen zugesetzt. Die eingesetzten Mengen sind in Tabelle 1 wiedergegeben.

### 3.14 Beispiel 9 (V9)

TPU-ZP 2 wurde als agglomerierte Recyklat eingesetzt. Es wurden Diol 1, Polyol 1 und Isocyanat 1 in den angegebenen Mengen zugesetzt. Die eingesetzten Mengen sind in Tabelle 1 wiedergegeben.

### 3.15 Beispiel 10 (V10)

TPU-ZP 3 wurde als agglomerierte Recyklat eingesetzt. Es wurden Diol 1, Polyol 1 und Isocyanat 1 in den angegebenen Mengen zugesetzt. Die eingesetzten Mengen sind in Tabelle 1 wiedergegeben.

### 3.16 Beispiel 11 (V11)

TPU-ZP 4 wurde als agglomerierte Recyklat eingesetzt. Es wurden Diol 1, Polyol 1 und Isocyanat 1 in den angegebenen Mengen zugesetzt. Die eingesetzten Mengen sind in Tabelle 1 wiedergegeben.

### 3.17 Beispiel 12 (V12)

TPU-ZP 4 wurde als agglomerierte Recyklat eingesetzt. Es wurden Diol 1, Polyol 1 und Isocyanat 1 in den angegebenen Mengen zugesetzt. Die eingesetzten Mengen sind in Tabelle 1a und b wiedergegeben.

**Tabelle 1a**

| Einsatzstoffe / Anteile | VB 1 | VB 2 | VB3 | VB4 | VB5 | V1 | V2 | V3 | V4 | V5 |
|---|---|---|---|---|---|---|---|---|---|---|
| TPU 1 | 100 | 100 | 97,8 | 98,5 | 97,75 | 79,50 | 79,51 | 69,49 | 79,50 | |
| TPU 2 | | | | | | | | | | 64,88 |
| TPU 3 | | | | | | | | | | |
| TPU-ZP1 | | | | | | | | | | |
| TPU-ZP2 | | | | | | | | | | |
| TPU-ZP3 | | | | | | | | | | |
| TPU-ZP4 | | | | | | | | | | |
| x-Flex | | | | 1,5 | 2,25 | | | | | |
| Diol 1 | | | | 1,5 | 2,25 | 1,11 | 4,13 | 0,67 | 1,11 | 1,04 |
| Polyol 1 | | | | | | 12,53 | 3,41 | 21,82 | 12,53 | 24,81 |
| Isocyanat 1 | | | 2,2 | | | 6,86 | 12,95 | 8,03 | 6,86 | 9,27 |

**Tabelle 1b**

| Einsatzstoffe/ Anteile | V6 | V7 (25/18) | V8 (25/20) | V9 (25/16) | V10 (25/22) | V11 (25/14) | V12 (25/15) |
|---|---|---|---|---|---|---|---|
| TPU 1 | | | | | | | |
| TPU 2 | | | | | | | |
| TPU 3 | 69,83 | | | | | | |
| TPU-ZP1 | | 80 | | | | | |
| TPU-ZP2 | | | 70 | 70 | | | |
| TPU-ZP3 | | | | | 80 | | |
| TPU-ZP4 | | | | | | 80 | 50 |
| x-Flex | | | | | | | |
| Diol 1 | 1,02 | 1,12 | 0,17 | 6,67 | 3,65 | 3,79 | 1,58 |
| Polyol 1 | 20,85 | 12,62 | 23,49 | 3,58 | 4,97 | 4,54 | 35,21 |
| Isocyanat 1 | 8,30 | 6,26 | 6,34 | 19,67 | 11,38 | 11,67 | 13,20 |

### 4. Eigenschaften der erhaltenen agglomerierten Zwischenprodukte

| | Shore A | Zugfestigkeit | Reißdehnung [%] | Weiterreißfestigkeit (mit Einschnitt) [kN/m] | Abriebbestimmung [mm³] |
|---|---|---|---|---|---|
| VB2 | 85 | 19 | 580 | 41 | 130 |
| ZP1 | 76 | 46 | 710 | 55 | 40 |
| ZP2 | 71 | 38 | 780 | 50 | 36 |
| ZP3 | 76 | 40 | 720 | 43 | 38 |
| ZP4 | 88 | 41 | 510 | 69 | 73 |

Im Gegensatz zu dem Vergleichsbeispiel zeigen die erfindungsgemäßen Zwischenprodukte gute mechanische Eigenschaften und weniger Abspaltungen der Polymerketten.

### 5. Eigenschaften der erhaltenen thermoplastischen Polyurethane

Die erhaltenen thermoplastischen Polyurethane wurden hinsichtlich ihrer mechanischen Eigenschaften untersucht. Die Ergebnisse sind in Tabelle 2 wiedergegeben.

**Tabelle 2**

| | MFR (190°C, 21,6kg) | Dichte [g/cm³] | Shore A | Zugfestigkeit | Reißdehnung [%] | Weiterreißfestigkeit (mit Einschnitt) [kN/m] | Abriebbestimmung [mm³] |
|---|---|---|---|---|---|---|---|
| VB1 | > 250 | 1,104 | 76 | 26 | 830 | 47 | 99 |
| VB2 | > 250 | 1,103 | 75 | 20 | 840 | 35 | 134 |
| VB3 | 15 | 1,106 | 78 | 41 | 460 | 22 | 48 |
| VB4 | 46 | 1,104 | 77 | 32 | 770 | 50 | 64 |
| VB5 | 8,5 | 1,103 | 76 | 43 | 680 | 44 | 47 |
| V1 | 77 | 1,102 | 77 | 31 | 850 | 49 | 56 |
| V2 | 5 | 1,129 | 89 | 50 | 460 | 58 | 37 |
| V3 | 65 | 1,096 | 71 | 36 | 770 | 50 | 47 |
| V4 | 158 | 1,103 | 77 | 32 | 820 | 46 | 75 |
| V5 | n.b. | 1,137 | 93 | 42 | 420 | 78 | 43 |
| V6 | n.b. | 1,168 | 87 | 39 | 550 | 65 | 38 |
| V7 | n.b. | 1,117 | 84 | 53 | 510 | 51 | 35 |
| V8 | 47 | 1,085 | 65 | 32 | 880 | 44 | 41 |
| V9 | 13 | 1,14 | 94 | 45 | 600 | 100 | 39 |
| V10 | 4,4 | 1,124 | 89 | 45 | 480 | 69 | 34 |
| V11 | 14 | 1,126 | 86 | 45 | 600 | 82 | 36 |
| V12 | 73 | 1,097 | 75 | 24 | 860 | 47 | 63 |

Im Gegensatz zu den Vergleichsbeispielen lassen sich bei den erfindungsgemäßen Beispielen die Shorehärten über den Hartsegmentgehalt gezielt einstellen und gute mechanische Eigenschaften unabhängig vom Einsatzmaterial erzielen. Über die Einstellung der Kennzahl, dem Verhältnis der -OH zu -NCO Gruppen, lassen sich die Schmelzviskositäten, ausgedrückt durch den MFR, einstellen.

### 6. Messmethoden

| | |
|---|---|
| MFR (getr.2h/110°C) | DIN EN ISO 1134 |
| Dichte | DIN EN ISO 1183-1A |
| Shore A | DIN ISO 7619-1 |
| Shore D | DIN ISO 7619-1 |
| Zugfestigkeit | DIN 53504-S2 |
| Reißdehnung | DIN 53504-S2 |
| Weiterreißfestigkeit (mit Einschnitt) | DIN ISO 34-1, B (b] |
| Abriebbestimmung | DIN ISO 4649 |

### Zitierte Literatur

"Kunststoff-Handbuch", Band 7, Polyurethane, 3. Auflage, 1993, herausgegeben von G. Oertel, Carl Hanser Verlag, München
DE 43 16 389 A1

## Patentansprüche

1. Verfahren zur Herstellung eines thermoplastischen Polyurethans umfassend die Schritte
(a) Umsetzung mindestens eines thermoplastischen Polyurethans (TPU-1) oder eines Polyurethangemisches enthaltend ein thermoplastisches Polyurethan (TPU-1) mit mindestens einer Verbindung (V1), die zwei Hydroxygruppen aufweist, unter Erhalt eines Gemischs (G-a) enthaltend ein thermoplastisches Polyurethan (TPU-2), wobei das mittlere Molekulargewicht des thermoplastischen Polyurethans (TPU-2) geringer ist, als das mittlere Molekulargewicht des thermoplastischen Polyurethans (TPU-1); wobei die Verbindung (V1) ausgewählt ist aus Diolen (D1) mit einem zahlenmittleren Molekulargewicht < 500 g/mol oder Polyolen (P1) mit einem zahlenmittleren Molekulargewicht ≥ 500 g/mol,
(b) Umsetzung des Gemischs (G-a) mit einem Gemisch (G-b) enthaltend eine Isocyanatzusammensetzung (ZI) enthaltend mindestens ein Diisocyanat und optional eine Polyolzusammensetzung (ZP) enthaltend mindestens ein Polyol (P2) unter Erhalt eines thermoplastischen Polyurethans (TPU-Ziel),
wobei der Anteil der eingesetzten Komponenten (ZI) und (ZP) auf den Hartsegmentgehalt des eingesetzten thermoplastischen Polyurethans (TPU-1), (V1) und den Hartsegmentgehalt des thermoplastischen Polyurethans (TPU-Ziel) abgestimmt wird,
wobei der Anteil der eingesetzten Komponenten
(ZI), (ZP) und (D1), (P1) auf den Hartsegmentgehalt des eingesetzten thermoplastischen Polyurethans (TPU-1) über die Formel (1) abgestimmt wird: ${HSC}_{G - c} = \left({HSC}_{TPU - Ziel}-{w}_{TPU - 1}*{HSC}_{TPU - 1}\right) / \left(1-{w}_{TPU - 1}\right)$ (1),
mit
- HSC_{G-c} Hartsegmentgehalt eines Gemischs G-c, wobei G-c = G-b + V1= G-b + D1 + P1
- HSC_{TPU-Ziel} Hartsegmentgehalt des erhaltenen thermoplastischen Polyurethans TPU-Ziel
- w_{TPU-1} Massenanteil des thermoplastischen Polyurethans TPU-1 mit (wᵢ): wᵢ = mᵢ / mₜₒₜₐₗ (2)
- HSC_{TPU-1} Hartsegmentgehalt des thermoplastischen Polyurethans TPU-1.

2. Verfahren gemäß Anspruch 1, wobei das thermoplastische Polyurethan (TPU-2) ein mittleres Molekulargewicht Mw von weniger als 50% des mittleren Molekulargewichts von (TPU-1) aufweist.

3. Verfahren gemäß einem der Ansprüche 1 oder 2, wobei das thermoplastische Polyurethan (TPU-2) OH-terminiert ist und ein mittleres Molekulargewicht Mw von kleiner 50000 aufweist.

4. Verfahren gemäß einem der Ansprüche 1 bis 3, wobei die Umsetzung gemäß Schritt (a) bei einer Temperatur im Bereich von 200 bis 360°C erfolgt.

5. Verfahren gemäß einem der Ansprüche 1 bis 4, wobei die Umsetzung gemäß Schritt (b) bei einer Temperatur im Bereich von 170 bis 260°C erfolgt.

6. Verfahren gemäß einem der Ansprüche 1 bis 5, wobei die Umsetzung gemäß Schritt (a) und die Umsetzung gemäß Schritt (b) kontinuierlich in einem Extruder erfolgen.

7. Verfahren gemäß einem der Ansprüche 1 bis 6, wobei die Umsetzung gemäß Schritt (a) mindestens ein Katalysator zugegeben wird, der die Spaltung von (TPU-1) beschleunigt.

8. Verfahren gemäß Anspruch 7, wobei der Katalysator ausgewählt ist aus der Gruppe bestehend aus Metallkatalysatoren auf der Basis von Zinn, Zink, Titan, Bismuth oder Eisen.

9. Verfahren gemäß einem der Ansprüche 1 bis 8, wobei das Diol (D1) ausgewählt ist aus der Gruppe bestehend aus 1,2-Ethylenglykol, 1,3-Propandiol, 1,4-Butandiol und 1,6-Hexandiol

10. Verfahren gemäß einem der Ansprüche 1 bis 9, wobei das Polyol (P1) oder das Polyol (P2) oder das Polyol (P1) und das Polyol (P2) ausgewählt ist aus der Gruppe bestehend aus Polyetherolen, Polyesterolen, Polycarbonatalkoholen und Hybridpolyolen.

11. Verfahren gemäß einem der Ansprüche 1 bis 10, wobei das Diisocyanat ausgewählt ist aus der Gruppe bestehend aus 2,2'-, 2,4'- und/oder 4,4'-Diphenylmethandiisocyanat (MDI), 2,4- und/oder 2,6-Toluylendiisocyanat (TDI), 4,4'-, 2,4'- und/oder 2,2'-Methylendicyclohexyldiisocyanat (H12MDI), Hexamethylendiisocyanat (HDI) und 1-Isocyanato-3,3,5-trimethyl-5-isocyanatomethyl-cyclohexan (IPDI).

12. Verfahren gemäß einem der Ansprüche 1 bis 11, wobei das eingesetzte thermoplastische Polyurethan (TPU-1) oder das Polyurethangemisch enthaltend ein thermoplastisches Polyurethan (TPU-1) aus einem Recycling-Prozess stammt.

13. Verfahren gemäß Anspruch 12, wobei der Recycling-Prozess mindestens die Schritte (i) bis (iii) umfasst:
(i) Bereitstellen eines Formkörpers, der im wesentlichen aus mindestens einem thermoplastischen Polyurethan besteht,
(ii) Zerkleinerung des Formkörpers,
(iii) Agglomerieren des zerkleinerten Formkörpers zu einem Zwischenprodukt (TPU-ZP).

14. Verfahren gemäß Anspruch 13, wobei der Formkörper ein Schuh oder ein Teil eines Schuhs ist.

15. Verfahren gemäß Anspruch 13 oder 14, wobei der Formkörper ein reines oder verschweißtes expandiertes thermoplastisches Polyurethan umfasst.

16. Verfahren gemäß einem der Ansprüche 13 bis 15, wobei der Formkörper zu mindestens 85 Gew.-% aus einem thermoplastischen Polyurethan besteht.

17. Verfahren gemäß einem der Ansprüche 13 bis 16, wobei der Formkörper zu mindestens 95 Gew.-% aus einem thermoplastischen Polyurethan besteht.

18. Verfahren gemäß einem der Ansprüche 13 bis 17, wobei beim Agglomerieren gemäß Schritt (iii) die Temperatur unterhalb von 200°C liegt.

19. Verfahren gemäß einem der Ansprüche 13 bis 18, wobei für das Agglomerieren gemäß Schritt (iii) eine Vorrichtung eingesetzt wird, umfassend eine Förderschnecke mit Guteinlauf und einen ringscheibenförmigen Verdichtungsraum, wobei die Förderschnecke das Aufgabegut axial in den Verdichtungsraum leitet.

## Claims

1. Process for preparing a thermoplastic polyurethane comprising the steps
(a) Reacting at least one thermoplastic polyurethane (TPU-1) or a polyurethane mixture containing a thermoplastic polyurethane (TPU-1) with at least one compound (V1) having two hydroxyl groups, to obtain a mixture (G-a) containing a thermoplastic polyurethane (TPU-2), wherein the average molecular weight of the thermoplastic polyurethane (TPU-2) is lower than the average molecular weight of the thermoplastic polyurethane (TPU-1); wherein the compound (V1) is selected from diols (D1) having a number-average molecular weight < 500 g/mol or polyols (P1) having a number-average molecular weight ≥ 500 g/mol,
(b) Reacting the mixture (G-a) with a mixture (G-b) containing an isocyanate composition (ZI) containing at least one diisocyanate and optionally a polyol composition (ZP) containing at least one polyol (P2) to obtain a thermoplastic polyurethane (TPU-target),
wherein the proportion of the components (ZI) and (ZP) used is matched to the hard segment content of the thermoplastic polyurethane (TPU-1) used, (V1) and the hard segment content of the thermoplastic polyurethane (TPU-target),
wherein the proportion of the components used
(ZI), (ZP) and (D1), (P1) is matched to the hard segment content of the thermoplastic polyurethane (TPU-1) used via formula (1): ${HSC}_{G - c} = \left({HSC}_{TPU - target}-{W}_{TPU - 1}*{HSC}_{TPU - 1}\right) / \left(1-{W}_{TPU - 1}\right)$ (1), with
- HSC_{G-c} hard segment content of a mixture G-c, where G-c = G-b + V1 = G-b + D1 + P1
- HSC_{TPU-target} hard segment content of the obtained thermoplastic polyurethane TPU-target
- w_{TPU-1} mass fraction of the thermoplastic polyurethane TPU-1 with (wᵢ): wᵢ = mᵢ / mₜₒₜₐₗ (2)
- HSC_{TPU-1} hard segment content of the thermoplastic polyurethane TPU-1.

2. Process according to Claim 1, wherein the thermoplastic polyurethane (TPU-2) has an average molecular weight Mw of less than 50% of the average molecular weight of (TPU-1).

3. Process according to either of Claims 1 or 2, wherein the thermoplastic polyurethane (TPU-2) is OH-terminated and has an average molecular weight Mw of less than 50000.

4. Process according to any of Claims 1 to 3, wherein the reaction according to step (a) takes place at a temperature in the range from 200 to 360°C.

5. Process according to any of Claims 1 to 4, wherein the reaction according to step (b) takes place at a temperature in the range from 170 to 260°C.

6. Process according to any of Claims 1 to 5, wherein the reaction according to step (a) and the reaction according to step (b) are carried out continuously in an extruder.

7. Process according to any of Claims 1 to 6, wherein at least one catalyst which accelerates the cleavage of (TPU-1) is added to the reaction according to step (a).

8. Process according to Claim 7, wherein the catalyst is selected from the group consisting of metal catalysts based on tin, zinc, titanium, bismuth or iron.

9. Process according to any of Claims 1 to 8, wherein the diol (D1) is selected from the group consisting of 1,2-ethylene glycol, 1,3-propanediol, 1,4-butanediol and 1,6-hexanediol

10. Process according to any of Claims 1 to 9, wherein the polyol (P1) or the polyol (P2) or the polyol (P1) and the polyol (P2) is selected from the group consisting of polyetherols, polyesterols, polycarbonate alcohols and hybrid polyols.

11. Process according to any of Claims 1 to 10, wherein the diisocyanate is selected from the group consisting of 2,2'-, 2,4'- and/or 4,4'-diphenylmethane diisocyanate (MDI), 2,4-and/or 2,6-toluylene diisocyanate (TDI), 4,4'-, 2,4'- and/or 2,2'-methylenedicyclohexyl diisocyanate (H₁₂MDI), hexamethylene diisocyanate (HDI) and 1-isocyanato-3,3,5-trimethyl-5-isocyanatomethyl-cyclohexane (IPDI).

12. Process according to any of Claims 1 to 11, wherein the thermoplastic polyurethane (TPU-1) used or the polyurethane mixture containing a thermoplastic polyurethane (TPU-1) originates from a recycling process.

13. Process according to Claim 12, wherein the recycling process comprises at least steps (i) to (iii):
(i) Providing a molded body consisting essentially of at least one thermoplastic polyurethane,
(ii) Comminution of the molded body,
(iii) Agglomeration of the comminuted molded body to give an intermediate product (TPU-ZP).

14. Process according to Claim 13, wherein the molded body is a shoe or a part of a shoe.

15. Process according to Claim 13 or 14, wherein the molded body comprises a pure or welded expanded thermoplastic polyurethane.

16. Process according to any of Claims 13 to 15, wherein the molded body consists of at least 85% by weight of a thermoplastic polyurethane.

17. Process according to any of Claims 13 to 16, wherein the molded body consists of at least 95% by weight of a thermoplastic polyurethane.

18. Process according to any of Claims 13 to 17, wherein during the agglomeration according to step (iii) the temperature is below 200°C.

19. Process according to any of Claims 13 to 18, wherein for the agglomeration according to step (iii) a device is used comprising a conveying screw with a material inlet and an annular disc-shaped compaction chamber, wherein the conveying screw guides the feed material axially into the compaction chamber.

## Revendications

1. Procédé de préparation d'un polyuréthane thermoplastique comprenant les étapes
(a) Réaction d'au moins un polyuréthane thermoplastique (TPU-1) ou d'un mélange de polyuréthanes contenant un polyuréthane thermoplastique (TPU-1) avec au moins un composé (V1) présentant deux groupes hydroxy, pour obtenir un mélange (G-a) contenant un polyuréthane thermoplastique Polyuréthane (TPU-2), la masse moléculaire moyenne du polyuréthane thermoplastique (TPU-2) étant inférieure à la masse moléculaire moyenne du polyuréthane thermoplastique (TPU-1) ; le composé (V1) étant choisi parmi les diols (D1) ayant une masse moléculaire moyenne en nombre < 500 g/mol ou les polyols (P1) ayant une masse moléculaire moyenne en nombre ≥ 500 g/mol,
(b) Réaction du mélange (G-a) avec un mélange (G-b) contenant une composition d'isocyanate (ZI) contenant au moins un diisocyanate et optionnellement une composition de polyol (ZP) contenant au moins un polyol (P2) pour obtenir un polyuréthane thermoplastique (TPU-cible),
la proportion des composants utilisés (ZI) et (ZP) étant ajustée en fonction de la teneur en segments durs du polyuréthane thermoplastique utilisé (TPU-1), (V1) et de la teneur en segments durs du polyuréthane thermoplastique (TPU-cible),
la proportion des composants utilisés
(ZI), (ZP) et (D1), (P1) étant ajustée en fonction de la teneur en segments durs du polyuréthane thermoplastique utilisé (TPU-1) via la formule (1) : ${HSC}_{G - c} = \left({HSC}_{TPU}-cible-WTPU-1*HSCTPu-1\right) / \left(1-WTPU-1\right)$ (1), avec
- HSC_{G-c} teneur en segments durs d'un mélange G-c, où G-c = G-b + V1 = G-b + D1 + P1
- HSC_{TPu-cible} teneur en segments durs du polyuréthane thermoplastique obtenu TPU-cible
- w_{TPU-1} fraction massique du polyuréthane thermoplastique TPU-1 avec (wᵢ) : wᵢ = mᵢ / mₜₒₜₐₗ (2)
- HSC_{TPU-1} teneur en segments durs du polyuréthane thermoplastique TPU-1.

2. Procédé selon la revendication 1, dans lequel le polyuréthane thermoplastique (TPU-2) présente une masse moléculaire moyenne Mw inférieure à 50 % de la masse moléculaire moyenne de (TPU-1).

3. Procédé selon l'une des revendications 1 ou 2, dans lequel le polyuréthane thermoplastique (TPU-2) est à terminaison OH et présente une masse moléculaire moyenne Mw inférieure à 50 000.

4. Procédé selon l'une des revendications 1 à 3, dans lequel la réaction selon l'étape (a) est effectuée à une température comprise entre 200 et 360 °C.

5. Procédé selon l'une des revendications 1 à 4, dans lequel la réaction selon l'étape (b) est effectuée à une température comprise entre 170 et 260 °C.

6. Procédé selon l'une des revendications 1 à 5, dans lequel la réaction selon l'étape (a) et la réaction selon l'étape (b) sont effectuées en continu dans une extrudeuse.

7. Procédé selon l'une des revendications 1 à 6, dans lequel au moins un catalyseur accélérant la scission de (TPU-1) est ajouté lors de la réaction selon l'étape (a).

8. Procédé selon la revendication 7, dans lequel le catalyseur est choisi dans le groupe constitué des catalyseurs métalliques à base d'étain, de zinc, de titane, de bismuth ou de fer.

9. Procédé selon l'une des revendications 1 à 8, dans lequel le diol (D1) est choisi dans le groupe constitué du 1,2-éthylèneglycol, du 1,3-propanediol, du 1,4-butanediol et du 1,6-hexanediol

10. Procédé selon l'une des revendications 1 à 9, dans lequel le polyol (P1) ou le polyol (P2) ou le polyol (P1) et le polyol (P2) sont choisis dans le groupe constitué des polyéthérols, des polyestérols, des polycarbonatealcools et des polyols hybrides.

11. Procédé selon l'une des revendications 1 à 10, dans lequel le diisocyanate est choisi dans le groupe constitué du 2,2'-, 2,4'- et/ou 4,4'-diphénylméthane diisocyanate (MDI), du 2,4- et/ou 2,6-toluylène diisocyanate (TDI), du 4,4'-, 2,4'- et/ou 2,2'-méthylènedicyclohexyl diisocyanate (H12MDI), du hexaméthylène diisocyanate (HDI) et du 1-isocyanato-3,3,5-triméthyl-5-isocyanatométhyl-cyclohexane (IPDI).

12. Procédé selon l'une des revendications 1 à 11, dans lequel le polyuréthane thermoplastique utilisé (TPU-1) ou le mélange de polyuréthanes contenant un polyuréthane thermoplastique (TPU-1) provient d'un processus de recyclage.

13. Procédé selon la revendication 12, dans lequel le processus de recyclage comprend au moins les étapes (i) à (iii) :
(i) Mise à disposition d'un corps moulé constitué essentiellement d'au moins un polyuréthane thermoplastique,
(ii) Broyage du corps moulé,
(iii) Agglomération du corps moulé broyé en un produit intermédiaire (TPU-ZP).

14. Procédé selon la revendication 13, dans lequel le corps moulé est une chaussure ou une partie d'une chaussure.

15. Procédé selon la revendication 13 ou 14, dans lequel le corps moulé comprend un polyuréthane thermoplastique expansé pur ou soudé.

16. Procédé selon l'une des revendications 13 à 15, dans lequel le corps moulé est constitué d'au moins 85 % en poids d'un polyuréthane thermoplastique.

17. Procédé selon l'une des revendications 13 à 16, dans lequel le corps moulé est constitué d'au moins 95 % en poids d'un polyuréthane thermoplastique.

18. Procédé selon l'une des revendications 13 à 17, dans lequel lors de l'agglomération selon l'étape (iii) la température est inférieure à 200 °C.

19. Procédé selon l'une des revendications 13 à 18, dans lequel pour l'agglomération selon l'étape (iii) un dispositif est utilisé, comprenant une vis de transport avec une entrée de matière et un espace de compactage en forme de disque annulaire, la vis de transport guidant axialement la matière à traiter dans l'espace de compactage.
